# EUROPÄISCHE PATENTSCHRIFT

(11) **EP 1 895 297 B1**
(45) Veröffentlichungstag und Bekanntmachung des Hinweises auf die Patenterteilung: **01.07.2009**
(21) Anmeldenummer: 07114606.2
(22) Anmeldetag: 20.08.2007
(51) Int. Cl.: G01N 29/04, H01L 21/66

(54) **Verfahren zur zerstörungsfreien Materialprüfung von hochreinem polykristallinen Silicium**
Method for the nondestructive material testing of highly pure polycrystalline silicon
Mèthode pour le controle non destructif de matériau du silicium polycristallin de haute pureté

(30) Priorität: 30.08.2006 DE 102006040486
(43) Veröffentlichungstag der Anmeldung: 05.03.2008
(73) Patentinhaber: Wacker Chemie AG, 81737 München (DE)
(72) Erfinder: Hegen, Andreas, 84489, Burghausen (DE); Schantz, Matthäus, 84367, Reut (DE); Lichtenegger, Bruno, 84503, Altötting (DE)
(74) Vertreter: Potten, Holger

(56) Entgegenhaltungen:
- JP-A- 2001 021 543
- US-A- 4 803 884
- US-A1- 2005 028 594
- US-B1- 6 439 054
- US-B1- 6 865 948
- REHWALD W ET AL: "Non-destructive ultrasonic detection of thermoplastic deformation in silicon wafers" SEMICONDUCTOR SCIENCE AND TECHNOLOGY, IOP, BRISTOL, GB, Bd. 1, Nr. 4, 1. Oktober 1986 (1986-10-01), Seiten 280-284, XP020031510 ISSN: 0268-1242
- SERGEI OSTAPENKO ET AL: "Crack Detection and Analyses using Resonance Ultrasonic Vibrations in Crystalline Silicon Wafers" Mai 2006 (2006-05), PHOTOVOLTAIC ENERGY CONVERSION, CONFERENCE RECORD OF THE 2006 IEEE 4TH WORLD CONFERENCE ON, IEEE, PI, PAGE(S) 920-923 , XP031007455 ISBN: 1-4244-0016-3 * Zusammenfassung; Abbildung 1 * * Seite 920, Absatz EXPERIMENT *

## Beschreibung

Die Erfindung betrifft ein Verfahren zur zerstörungsfreien Materialprüfung von hochreinem polykristallinen Silicium.

Hochreines polykristallines Silicium, im Folgenden als Polysilicium bezeichnet, dient unter anderem als Ausgangsmaterial für die Herstellung von elektronischen Bauteilen und Solarzellen. Es wird in großem Maßstab durch thermische Zersetzung und CVD Abscheidung eines siliciumhaltigen Gases oder eines siliciumhaltigen Gasgemisches in Siemens-Reaktoren hergestellt. Das Polysilicium fällt dabei als Polysiliciumformkörper an. Diese können anschließend mechanisch bearbeitet werden.

Diese Polysiliciumformkörper müssen mittels eines zerstörungsfreien Prüfverfahrens auf ihre Materialgüte geprüft werden. Dazu bedient man sich in der Regel der akustischen Resonanzanalyse, auch "Klangprüfung" genannt. Dabei wird der Polysiliciumformkörper von außen angeregt, z. B. mit einem leichten Hammerschlag, und die daraus resultierenden, natürlichen Eigenresonanzen liefern dem Fachmann eine Aussage über die Materialgüte des Polysiliciumformkörpers. Ein Vorteil der Resonanzanalyse ist die sehr kurze Prüfzeit von nur wenigen Sekunden. Zudem wird bei der Prüfung der gesamte Prüfkörper untersucht, d.h. die Prüfung ist ein volumenorientiertes Prüfverfahren. Ein Nachteil der Resonanzanalyse ist, dass eine genaue Lokalisierung oder Materialfehleridentifikation mit diesem Verfahren nicht möglich ist. Weiter wird der Polysiliciumformkörper bei jeder Prüfung durch einen Hammerschlag berührt und somit kontaminiert, was einen anschließenden Reinigungsschritt zwingend erfordert. Ein weiterer Nachteil der Resonanzanalyse ist, dass der Polysiliciumformkörper bei der Prüfung beschädigt werden kann. So kann es z. B. zu oberflächlichen Abplatzungen oder gar zur Zerstörung des Polysiliciumformkörpers kommen. Nachteilig ist ferner, dass sich die Polysiliciumformkörper in ihrer Form, z. B. in Durchmesser und Länge oder in Länge, Breite und Höhe oder Endstückgeometrie, unterscheiden und jeder Polysiliciumformkörper aufgrund seiner unterschiedlichen Geometrie eine andere Eigenresonanz erzeugt. Dies erschwert die Vergleichbarkeit der Prüfergebnisse. Kleine Defekte, die die Materialgüte beeinträchtigen, wie Risse, Lunker oder Einschlüsse, deren Dimension nur wenige Millimeter groß ist, können mit diesem Prüfverfahren nicht detektiert werden.

Ein weiteres zerstörungsfreies Prüfverfahren für Polysilicium ist die visuelle Kontrolle. Dabei wird die gesamte Oberfläche des zu prüfenden Polysiliciumformkörpers, durch einen Fachmann begutachtet. Die visuelle Kontrolle kann mit diversen Hilfsmitteln, wie speziellen Beleuchtungssystemen oder Vergrößerungsgläser, verbessert werden. Auch bei der visuellen Kontrolle können zwar Oberflächenfehler erkannt und lokalisiert werden, aber auch hier werden nachteiligerweise Materialfehler im Inneren des Polysiliciumformkörpers nicht erkannt. Weiter wird die Prüfung von einem Menschen durchgeführt, d.h. die Ergebnisse sind nicht objektiv und sicher reproduzierbar, sondern hängen von der "Tagesform" und der Erfahrung des Prüfers ab.

Für die beiden genannten zerstörungsfreien Prüfverfahren gilt zudem, dass der Polysiliciumformkörper von dem Prüfer mit Hilfsmitteln gewendet wird. Diese Hilfsmittel, z. B. Handschuhe, können zwischen zwei Prüfungen mit Schmutzpartikel beladen werden, was bei der Prüfung zur Verunreinigung des Polysiliciumformkörpers führt und einen anschließenden Reinigungsschritt zwingend erforderlich macht.

JP2001021543A beschreibt ein Verfahren, bei dem polykristalline Siliciumbarren in einem Wasserbad, d.h. mittels Tauchtechnik geprüft werden.

Aufgabe der Erfindung war es, ein zerstörungsfreies Prüfverfahren für einen polykristallinen Siliciumformkörper mit einem Durchmesser von 3 mm bis 300 mm und einer zu vermessenden Länge von 10 mm bis 4500 mm, hergestellt mittels CVD Abscheidung eines siliciumhaltigen Gases oder eines siliciumhaltigen Gasgemisches in Siemens-Reaktoren, auf einen Materialfehler zur Verfügung zu stellen, welches nicht die für den Stand der Technik genannten Nachteile aufweist.

Die Aufgabe wird durch ein Verfahren gemäß Anspruch 1 gelöst, bei dem der polykristalline Siliciumformkörper mit Ultraschallwellen durchstrahlt wird, wobei die Ultraschallankopplung mittels blasenfreien Wassers in Wasserstrahltechnik erfolgt, wobei das Wasser voll entsalzt ist, und die Ultraschallwellen nach Durchlaufen des Polysiliciumformkörpers von einem Ultraschallempfänger registriert werden und so Materialfehler im Polysilicium detektiert werden.

Erfindungsgemäß werden vorzugsweise Ultraschallwellen im Frequenzbereich von 100 kHz bis 25 MHz, besonders bevorzugt von 0,8 MHz bis 20 MHz, insbesondere bevorzugt von 2 - 12 MHz, von einem Ultraschallprüfkopf in das polykristalline Silicium eingebracht. Im polykristallinen Silicium breiten sie sich geradlinig aus, werden aber an Grenzflächen, wie sie bei Materialfehlern (beispielsweise Rissen, Lunkern oder Einschlüssen) zu finden sind, aber auch am Übergang von polykristallinem Silicium zu Luft, reflektiert. Die Materialfehler sind am besten zu orten, wenn ihre Hauptausdehnung senkrecht zur Ausbreitungsrichtung der Ultraschallwellen im Polysilicium verläuft. Vorzugsweise erfolgt daher im Lauf des erfindungsgemäßen Verfahrens eine Durchstrahlung des Polysiliciumformkörpers von allen Seiten, da dadurch eine genaue kontaminationsfreie und zerstörungsfreie Identifikation der Lage des detektierten Materialfehlers im Polysiliciumformkörper möglich ist.

Die Durchstrahlung des Polysiliciumformkörpers kann mittels des Durchschallungsverfahrens oder mittels des Impuls-Echo-Verfahrens erfolgen, wobei zweiteres bevorzugt ist.

Beim Durchschallungsverfahren wird das polykristalline Silicium zwischen Ultraschallsender und -empfänger angeordnet. Die durch das Polysilicium hindurch tretenden Ultraschallwellen werden vom Ultraschallempfänger wieder in elektrische Schwingungen umgewandelt (Piezo-Effekt) und zur Anzeige gebracht. Ein Materialfehler zeigt sich aufgrund seiner Grenzfläche zum Polysilicium als vermindertes oder fehlendes Signal. Eine Tiefenbestimmung eines Fehlers ist mit diesem Verfahren nicht möglich. Daher ist diese Variante der Ultraschallmessung zwar prinzipiell einsetzbar, erfindungsgemäß wird allerdings vorzugsweise das im Folgenden beschriebene Impuls-Echo-Verfahren angewendet. Bis auf die Ausführungen zur Tiefenbestimmung und Fehlerauswertung eines Fehlers gelten die folgenden Ausführungen zum Impuls-Echo-Verfahren jedoch analog auch für das Durchschallungsverfahren.

Bei dem Impuls-Echo-Verfahren dient der Ultraschallprüfkopf als Sender und Empfänger für die Ultraschallwellen. Ein Schallimpuls, der im Frequenzbereich von 100 kHz bis 25 MHz, besonders bevorzugt von 0,8 MHz bis 20 MHz, insbesondere bevorzugt von 2 - 12 MHz liegt, wird vom Ultraschallprüfkopf in den Polysiliciumformkörper eingestrahlt und nach vollständiger oder teilweiser Reflexion von dem gleichen Ultraschallprüfkopf registriert und in einen Empfängerimpuls zurückverwandelt. Sendeimpuls, Rückwandecho und ggf. Fehlerecho(s) werden elektronisch registriert, wobei über die jeweilige Laufzeit der reflektierten Ultraschallwellen eine Tiefenbestimmung eines Materialfehlers möglich ist. Als Fehlerecho wird dabei vorzugsweise jedes Echo bezeichnet, das im Fehlererwartungsbereich, dem Bereich zwischen Oberflächenecho und Rückwandecho, auftritt. Die registrierten Schallimpulse werden vorzugsweise im dB (Logarithmus mit Basis 10) ausgegeben.

Im erfindungsgemäßen Verfahren werden vorzugsweise 1 bis 5 Ultraschallprüfköpfe in einem Prüfkopfhalter integriert. Die Ultraschallprüfköpfe und der entsprechende Prüfkopfhalter werden im Folgenden als Prüfkopfeinheit bezeichnet. Vorzugsweise werden Winkelprüfköpfe mit Einschallwinkeln im Silicium zwischen 10° und 85° oder Senkrechtprüfköpfe eingesetzt.

Vorzugsweise fährt die Prüfkopfeinheit an den Polysiliciumformkörper heran. Dazu ist die Prüfkopfeinheit vorzugsweise mit einem berührungslosen Abstandshalter versehen. Der Prüfkopfabstand beträgt vorzugsweise 5 bis 200 mm, besonders bevorzugt 5 bis 80 mm.

Die Ultraschallankopplung erfolgt im Stand der Technik mit Gel, Öl, Kleister oder Wasser. Aufgrund der hohen Materialreinheit des Polysiliciums kann erfindungsgemäß nur Wasser als Koppelmedium für Polysilicium verwendet werden. Versuche haben gezeigt, dass nach der Prüfung mit Trinkwasser als Koppelmittelmedium auf der Polysiliciumoberfläche folgende Oberflächenmetallwerte zu finden sind:

| Fe | Cr | Ni | Na | Zn | Cl | Cu | Mo | Ti | W | K | Co | Mn | Ca | Mg | V |
|---|---|---|---|---|---|---|---|---|---|---|---|---|---|---|---|
| 1500 | 100 | 50 | 2500 | 100 | 300 | 50 | 1 | 250 | 1 | 500 | 0,5 | 15 | 4500 | 1500 | 0,5 |

Alle Angaben sind in pptw.

Dies hat zur Folge, dass das gesamte geprüfte Material im Anschluss zusätzliche gereinigt werden muss.

Überraschenderweise kann die Ultraschallankopplung auch mittels blasenfreien, vollentsalztem Wassers durchgeführt werden. Versuche haben gezeigt, dass nach der Prüfung mit vollentsalztem Wasser (pH ≤ 7,0; Widerstand = 18 MegOhm; schwebstofffrei) als Koppelmittelmedium auf der Polysiliciumoberfläche folgende Oberflächenmetallwerte zu finden sind:

| Fe | Cr | Ni | Na | Zn | Cl | Cu | Mo | Ti | W | K | Co | Mn | Ca | Mg | V |
|---|---|---|---|---|---|---|---|---|---|---|---|---|---|---|---|
| 15 | 1 | 0,5 | 25 | 10 | 30 | 1 | 1 | 25 | 1 | 5 | 0,5 | 0,5 | 45 | 11 | 0,5 |

Alle Angaben sind in pptw.

Somit kann durch den Einsatz von vollentsalztem Wassers eine zusätzliche Nachreinigung des Polysiliciumformkörpers eingespart werden.

Das erfindungsgemäße Verfahren ermöglicht somit erstmals die Prüfung eines Polysiliciumformkörpers, wobei die Oberfläche des Polysiliciumformkörpers hochrein bleibt (Oberflächenmetallwerte: Fe ≤ 15; Cr ≤ 1; Ni ≤ 0,5; Na ≤ 25; Zn ≤ 10; C1 ≤ 30; Cu ≤ 1; Mo ≤ 1; Ti ≤ 25; W ≤ 1; Kr ≤ 5; Co ≤ 0,5; Mn ≤ 0,5; Ca ≤ 45; mg ≤ 11; V ≤ 0,5; alle Angaben sind in pptw).

Die Ultraschallankopplung erfolgt in Wasserstrahltechnik mittels eines Wasserstrahls, welcher den Ultraschallprüfkopf mit der Oberfläche des Polysiliciumformkörpers luftblasenfrei verbindet.

Nach der Ultraschallankopplung beginnt die Durchstrahlung des Polysiliciumformkörpers mit den Ultraschallwellen. Vorzugsweise wird der Polysiliciumformkörper bei der Prüfung mit dem Ultraschallprüfkopf kontrolliert. Die Kontrolle erfolgt in beliebiger Form, besonders bevorzugt in Richtung der Längsachse des zu prüfenden Formkörpers, ganz besonders bevorzugt in schraubenförmiger Richtung entlang Längsachse und Umfang des zu prüfenden Formkörpers. Gleichzeitig oder alternativ dazu kann der Polysiliciumformkörper selbst bewegt, z. B. abgesenkt, angehoben oder horizontal bewegt werden. Ferner kann der Polysiliciumformkörper selbst in Rotation versetzt werden.

Die Kontroll-/Prüfgeschwindigkeit liegt vorzugsweise zwischen 1 und 1500 mm/s, besonders zwischen 150 mm/s und 600 mm/s.

Vorzugsweise erfolgt die Signalauswertung der reflektierten Ultraschallwellen in einer Recheneinrichtung. Dabei werden in einem definierten Zeitfenster, dem so genannten Fehlererwartungsbereich, das Signal der reflektierten Ultraschallwellen in der Recheneinrichtung mit einem Grundrauschniveau oder einem definierten Signalschwellwert verglichen. Wird das Grundrauschniveau oder der definierte Signalschwellwert überschritten, so gilt der Polysiliciumformkörper als fehlerhaft und wird der fehlerhaften Teilmenge (Polysiliciumformkörper nicht ok) zugeordnet. Durch Variation des Signalschwellwerts lässt sich die Empfindlichkeit der Fehlererkennung stufenlos variieren.

Die Ergebnisausgabe erfolgt vorzugsweise mittels einer Anzeigenvorrichtung, die ein eindeutiges Ergebnis, in der Regel "Polysiliciumformkörper ok" oder "Polysiliciumformkörper nicht ok", ausgibt. Die Prüfparameter, wie der definierte Signalschwellwert, Start des Fehlererwartungsbereiches, Ende des Fehlererwartungsbereichs, sind vorzugsweise in Form von Prüfprogrammen in der Recheneinheit hinterlegt, um das Verfahren schnell und einfach auf unterschiedliche Fehlergrenzen für unterschiedliche Abmessungen und Qualitätsänderungen, je nach Geometrie und Verwendungszweck des Polysiliciumformkörpers, anpassen zu können. Die Recheneinrichtung ermöglicht es ferner wie beschrieben, die Lage des Fehlers im Polysiliciumformkörper zu bestimmen und so fehlerhafte Bereiche im Polysiliciumformkörper zu spezifizieren. Dazu kann auf der Ergebnisausgabe der Siliciumformkörper mit dem fehlerhaften und fehlerfreien Bereich dargestellt werden.

Nach der Ultraschallprüfung erfolgt vorzugsweise eine Trocknung des Polysiliciumformkörpers.

Vorzugsweise fährt dazu eine mit Pressluft beaufschlagte Düse den Prüfweg in umgekehrter Richtung wie die Prüfung erfolgte ab, bis der Prüfling getrocknet ist.

Vorzugsweise handelt es sich bei dem Polysiliciumformkörper um Polysiliciumstäbe oder Stabstücke. Vorzugsweise haben die Polysiliciumformkörper einen Durchmesser von 50 mm bis 200 mm. Vorzugsweise werden Formkörper von 100 mm bis 3000 mm geprüft. Vorzugsweise sind die Formkörper mit einer maschinenlesbaren Identitäts-(ID) Nummer versehen, welche es ermöglicht, die Formkörper anhand der ID Nummer im erfindungsgemäßen Verfahren zu erfassen. Dies kann z. B. an der Recheneinrichtung erfolgen.

Das erfindungsgemäße Verfahren ist zur Prüfung von Polysiliciumformkörpern einer beliebigen Geometrie geeignet. So kann z. B. auch ein bananenförmiger Formkörper geprüft werden.

Das erfindungsgemaße Verfahren ermöglicht eine zerstörungsfreie Materialprüfung an hochreinem Polysilicium. Es werden verborgene Materialfehler in Oberflächennähe und im Inneren des Materials detektiert. Das Verfahren liefert ein eindeutiges und reproduzierbares Prüfergebnis. Die Materialfehler können bei Verwendung des Impuls-Echo-Verfahrens auch im Inneren des Polysiliciums genau lokalisiert und identifiziert werden.

Das Verfahren läuft kontaminationsfrei ab. Der zu prüfende Prolysiliciumformkörper kommt nur mit vollentsalztem Wasser (pH ≤ 7,0; Widerstand ≥ 0,5 MegOhm, besonders bevorzugt Widerstand ≥ 18 MegOhm; schwebstofffrei) in Berührung.

Dieses für die Prüfung benötigte Hilfsmittel wird vorzugsweise kontinuierlich zu 100 % qualitativ geprüft, da die Qualität dieses Hilfsstoffs unmittelbare Auswirkung auf die Oberflächenmetallwerte des Polysiliciumformkörpers hat.

Das erfindungsgemäße Verfahren ist ein volumenorientiertes Prüfverfahren, d.h. es können Materialfehlstellen von wenigen Zehntelmillimetern bis Millimetern im gesamten Polysiliciumformkörper detektiert und genau lokalisiert werden. So wurden mittels des erfindungsgemäßen Verfahrens bereits Defekte mit einem Durchmesser von 0,2 mm in einer Tiefe von 130 mm in einem polykristallinen Polysiliciumformkörper detektiert. Demgegenüber können mittels der Resonanzanalyse nur im Bulk liegende Materialfehler im Bereich von Zentimetern bis Dezimetern detektiert werden. Die visuelle Kontrolle ermöglicht nur eine oberflächenorientierte Prüfung, d.h. es können nur sichtbare Oberflächenfehler detektiert werden.

Das erfindungsgemäße automatisierte Prüfverfahren schließt die fehlerträchtige subjektive Beurteilung durch einen Menschen aus, es übersieht keine Fehler. Das Prüfverfahren liefert ein eindeutiges und reproduzierbares Prüfergebnis (Prüfling - OK / Prüfling - nicht OK), es ermöglicht ferner nicht spezifikationsgerechte Bereiche eines Polysiliciumformkörpers zu definieren.

Das erfindungsgemäße Verfahren bedarf keiner besonderen Vorbereitung des zu prüfenden Polysiliciumformkörpers, es kann somit einfach in einen bestehenden Fertigungsprozess eingeschoben werden.

Durch das Verfahren können zylindrische und konische Polysiliciumformkörper für einen FZ-Umschmelzprozess auf Materialfehlstellen hin untersucht werden. Es können ferner sowohl Stäbe bzw. Stabstücke (z. B. Cut-Rods. Nachcharchierstäbe, usw.) für einen FZ oder CZ-Umschmelzprozess auf Materialfehlstellen hin untersucht werden.

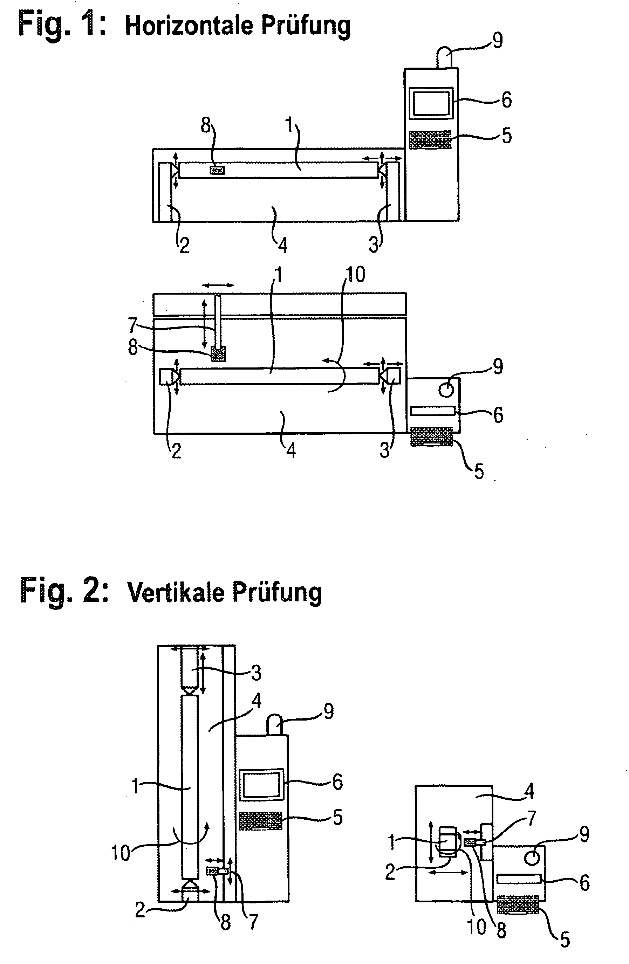

Die Erfindung stellt somit erstmals einen Polysiliciumformkörper zur Verfügung, der keine Defekte, worunter vorzugsweise Risse, Lunker oder Einschlüsse mit einer Projektionsfläche größer als 0,03 mm² zu verstehen sind, enthält. Vorzugsweise enthält ein Polysiliciumformkörper keinerlei Defekte und weist bei den nachfolgenden Auf- und Umschmelzprozessen ein vermindertes Absprung- und Abplatzverhalten auf.Das erfindungsgemäße Verfahren ist schematisch in Fig. dargestellt. Ein Verfahren, welches statt Wasserstrahltechnik Tauchtechnik verwendet, ist zu Vergleichszwecken in Fig. 1 dargestellt.
Fig. 1 zeigt eine Vorrichtung zur horizontalen Prüfung mittels Tauchtechnik in Seitenansicht und Aufsicht.
Fig. 2 zeigt eine Vorrichtung zur vertikalen Prüfung mittels des erfindungsgemäßen Verfahrens in Seitenansicht und Aufsicht. Die Nummerierung entspricht Fig. 1.
Die Fig. 3 zeigt die Prüfkopfeinheit (8) am Scannarm (7) bestehend aus den Prüfkopfhaltern (11) und den Ultraschallprüfköpfen (12) bei der Unterwasserprüfung, wie sie in Bsp. 1 beschrieben wird.
Die Fig. 4 zeigt die Prüfkopfeinheit (8) am Scannarm (7) bestehend aus den Prüfkopfhaltern (11) und den Ultraschallprüfköpfen (12) bei der Wasserstrahlprüfung, wie sie in Bsp. 2 beschrieben wird.

Die folgenden Beispiele dienen der weiteren Erläuterung der Erfindung.

### Beispiel 1: Horizontale Prüfung unter Wasser (Vergleiehsbeispiel)

Ein Polysiliciumformkörper (1) mit einem Durchmesser von 200 mm und einer Stablänge von 2500 mm wird horizontal in einer Vorrichtung gemäß Fig. 1 unter Wasser geprüft. Dazu wird der Polysiliciumformkörper (1) horizontal in die Wasserauffangwanne (4) gehoben und zwischen den Spitzen der Prüflingsaufnahmen (2) und (3) eingespannt. Die Wasserauffangwanne (4) wird mit vollentsalztem Wasser gefüllt. Parallel dazu wird der mit einer maschinenlesbaren Identitäts-(ID)Nummer versehene Polysiliciumformkörper (1) an der Recheneinrichtung (5+6) angemeldet, d.h. die maschinenlesbare Identitäts-(ID)Nummer wird der Recheneinrichtung (5+6) mitgeteilt. Im Anschluss wird das in der Rechnereinrichtung hinterlegte Prüfprogramm ausgewählt und die Prüfung gestartet.

Der Scannarm (7), an dessen Ende die Ultraschallprüfkopfeinheit (8) befestigt ist, fährt mit einer Vorschubsgeschwindigkeit von 10mm/s in Richtung Polysiliciumformkörper (1). Erreicht die Ultraschallprüfkopfeinheit (8) einen Abstand zwischen der Ultraschallprüfkopfeinheit (8) und dem Polysiliciumformkörper (1) von 5 mm, so wird der Vorschub des Scannarms (7) eingestellt.

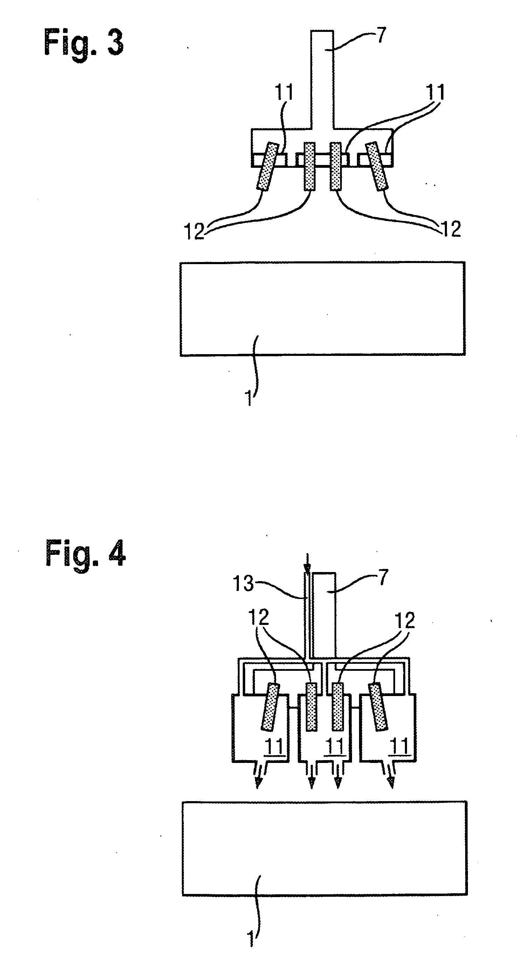

Die Ultraschallprüfkopfeinheit (8) besteht aus 3 Prüfkopfhaltern (11), 4 Ultraschallprüfköpfen (12) (Fig. 3) und der berührungslosen Abstandselektronik, welche in dem Scannarm (7) integriert ist (ohne Abbildung), die den Abstand zwischen Prüfkopfhalter und Formkörper konstant hält.

Die Ultraschallprüfköpfe (12) werden im Impuls-Echo-Verfahren betrieben. Jeder Ultraschallprüfkopf (12) sendet in einer vorher fest definierten Reihenfolge Impulse mit einer Frequenz von 12 MHz aus und empfängt die reflektierten Signale. Der Scannarm (7) fährt mit einer konstanten Geschwindigkeit von 1200 mm/s von der Prüflingsaufnahme (2) zur Prüflingsaufnahme (3) entlang der Oberfläche des Polysiliciumformkörpers (1). Der Polysiliciumformkörper (1) wird mittels der Prüflingsaufnahmen (2) und (3) um 1mm in Umfangsrichtung gedreht. Der Scannarm (7) fährt mit 1200 mm/s von der Prüflingsaufnahme (3) zur Prüflingsaufnahme (2) entlang der Oberfläche des Polysiliciumformkörpers (1) zurück. Die empfangenen Signale werden parallel dazu in der Recheneinrichtung (5+6) ausgewertet und die Ergebnisse visualisiert. Wird ein Materialfehler entdeckt, so blinkt eine Lampe (9) bis zum Prüfungsende. Mit dem Polysiliciumformkörper (1) wird so lange wie beschrieben verfahren, bis der gesamte Umfang des Polysiliciumformkörpers abgefahren und somit geprüft wurde. Nach Abschluss der Prüfung wird das vollentsalzte Wasser aus der Wasserauffangwanne (4) abgelassen. Die Prüflingsaufnahmen (2) und (3) werden geöffnet und der Polysiliciumformkörper (1) wird aus der Messvorrichtung entnommen. Je nach Anzeige (9) wird der Polysiliciumformkörper (1) als fehlerfrei oder fehlerbehaftet eingestuft.

### Beispiel 2: Horizontale Prüfung mit Wasserstrahlankopplung Ein Polysiliciumformkörper (1) mit einem Durchmesser von 200 mm und einer Stablänge von 2500 mm wird waagerecht gemäß Fig. 1 mit Wasserstrahlankopplung geprüft.

Der Prüfablauf erfolgt analog Beispiel 1 mit dem Unterschied, dass die Wasserauffangwanne (4) während der Ultraschallprüfung nicht mit vollentsalztem Wasser gefüllt ist und die Ultraschallprüfkopfeinheit (8), wie in Fig. 4 dargestellt und im Folgenden beschrieben, aufgebaut ist:

Die Ultraschallprüfkopfeinheit (8) besteht aus 3 Prüfkopfhaltern (11), 4 Ultraschallprüfköpfen (12) und der berührungslosen Abstandselektronik(ohne Abbildung), welche in dem Scannarm (7) integriert ist und den Abstand zwischen Ultraschallprüfkopfeinheit (8) und Polysiliciumformkörper (1) konstant hält. Den Prüfkopfhaltern (11) wird über Leitungen (13) kontinuierlich vollentsalztes Wasser zugeführt. Dieses Wasser füllt den Raum um die Ultraschallprüfköpfe (12) auf und bildet einen Wasserstrahl, der für die Ultraschallankopplung zwischen der

Ultraschallprüfköpfe (12) und der Oberfläche des Polysiliciumformkörpers (1) sorgt.
Die Prüfung erfolgt wie in Bsp. 1 beschrieben.
Im Anschluss an die Prüfungsfahrt, aber in umgekehrter Richtung erfolgt die Trocknung des Polysiliciumformkörpers (1) mittels Druckluft (nicht dargestellt). Nach dem Trocknen des Polysiliciumformkörpers (1) werden die Spitzen der Prüflingsaufnahmen (2) und (3) geöffnet und der Polysiliciumformkörper (1) wird entnommen. Je nach Anzeige (9) wird der Polysiliciumformkörper (1) als fehlerfrei oder fehlerbehaftet eingestuft.

### Beispiel 3: Vertikale Prüfung unter Wasser (Vergleichsbeispiel)

Die Prüfung erfolgt analog Bespiel 1 unter Verwendung der in Fig. 3 dargestellten Ultraschallprüfkopfeinheit mit dem Unterschied, dass der Polysiliciumformkörper (1) vertikal geprüft wird, wie in Fig. 2 dargestellt.

### Beispiel 4: Vertikale Prüfung mit Wasserstrahlankopplung

Die Prüfung erfolgt analog Bespiel 2 unter Verwendung der in Fig. 4 dargestellten Ultraschallprüfkopfeinheit mit dem Unterschied, dass der Polysiliciumformkörper (1) vertikal geprüft wird, wie in Fig. 2 dargestellt.

## Patentansprüche

1. Verfahren zur kontaminationsfreien und zerstörungsfreien Prüfung eines Polysiliciumformkörpers mit einem Durchmesser von 3 mm bis 300 mm und einer zu vermessenden Länge von 10 mm bis 4500 um, hergestellt mittels Zersetzung und CVD Abscheidung eines siliciumhaltigen Gases oder eines siliciumhaltigen Gasgemisches in Siemens-Reaktoren, auf einen Materialfehler, wobei der Polysiliciumformkörper mit Ultraschallwellen durchstrahlt wird, die Ultraschallankopplung mittels blasenfreien Wassers in Wasserstrahltechnik erfolgt, das Wasser vollentsalzt ist, die Ultraschallwellen nach Durchlaufen des Polysiliciumformkörpers von einem Ultraschallempfänger registriert werden und so Materialfehler im Polysilicium detektiert werden.

2. Verfahren gemäß Anspruch 1, **dadurch gekennzeichnet, dass** die Ultraschallwellen aus einem Ultraschallsender durch den Polysiliciumformkörper gestrahlt werden und die durch das Polysilicium hindurch tretenden Ultraschallwellen von einem Ultraschallempfänger wieder in elektrische Schwingungen umgewandelt und zur Anzeige gebracht werden.

3. Verfahren gemäß Anspruch 1 oder 2 **dadurch gekennzeichnet, dass** die Ultraschallwellen von einem Ultraschallprüfkopf durch den Polysiliciumformkörper gestrahlt und nach einer vollständigen oder teilweisen Reflexion von dem gleichen Ultraschallprüfkopf registriert in einen Empfängerimpuls zurückverwandelt werden.

4. Verfahren gemäß Anspruch 1, 2 oder 3, **dadurch gekennzeichnet, dass** die gesendeten und empfangenen Ultraschallwellen elektronisch registriert und ausgewertet werden, wobei über die jeweilige Laufzeit der Ultraschallwellen eine Lagebestimmung des Materialfehlers im Polysiliciumformkörper erfolgt.

5. Verfahren gemäß Anspruch 3, **dadurch gekennzeichnet, dass** der Ultraschallprüfkopf an den Polysiliciumformkörper herangebracht und mittels einer Ultraschallankopplung an den Polysiliciumformkörper angekoppelt wird, ehe eine Durchstrahlung mit den Ultraschallwellen erfolgt.

6. Verfahren gemäß einem der Ansprüche 3 oder 5, **dadurch gekennzeichnet, dass** die Signalauswertung der reflektierten Ultraschallwellen in einer Recheneinrichtung erfolgt und dabei die Zeitdifferenzen und/oder die Signalstärke zwischen den reflektierten Ultraschallwellen in der Recheneinrichtung mit vorgegebenen Parametern verglichen werden.

7. Verfahren gemäß einem der Ansprüche 3, 5 oder 6, **dadurch gekennzeichnet, dass** der Ultraschallprüfkopf auf einen Prüfkopf - abstand von 5 bis 200 mm, besonders bevorzugt 5 bis 80 mm, an den Polysiliciumformkörper herangebracht wird.

8. Verfahren gemäß einem der Ansprüche 1 bis 7, **dadurch gekennzeichnet, dass** die Oberfläche des Polysiliciumformkörpers hochrein bleibt, wobei unter hochrein folgende Oberflächenmetallwerte in pptw zu verstehen sind: Fe ≤ 15; Cr ≤ 1; Ni ≤ 0,5; Na ≤ 25; Zn ≤ 10; Cl ≤ 30; Cu ≤ 1; Mo ≤ 1; Ti ≤ 25; W ≤ 1; K ≤ 5; Co ≤ 0,5; Mn ≤ 0,5; Ca ≤ 45; Mg ≤ 11; V ≤ 0,5.

9. Verfahren gemäß einem der Ansprüche 1 bis 8, **dadurch gekennzeichnet, dass** der Polysiliciumformkörper, keine Defekte größer als 0,03 mm² Projektionsfläche enthält.

## Claims

1. Method for the noncontaminating and nondestructive testing of a shaped polysilicon body having a diameter of from 3 mm to 300 mm and a length of from 10 mm to 4500 mm to be analyzed, produced by means of decomposition and CVD deposition of a silicon-containing gas or of a silicon-containing gas mixture in Siemens reactors, for a material defect, the shaped polysilicon body being exposed to ultrasound waves, the ultrasound coupling being carried out by means of bubble-free water by a water jet technique, the water being fully deionized, the ultrasound waves being registered by an ultrasound receiver after they have passed through the shaped polysilicon body and material defects in the polysilicon thus being detected.

2. Method according to Claim 1, **characterized in that** the ultrasound waves are radiated through the shaped polysilicon body by an ultrasound emitter and- the ultrasound waves having passed through the polysilicon are converted back into electrical oscillations by an ultrasound receiver and are displayed.

3. Method according to Claim 1 or 2, **characterized in that** the ultrasound waves are radiated through the shaped polysilicon body by an ultrasound test head and, having been registered by the same ultrasound test head after complete or partial reflection, are converted back into a receiver pulse.

4. Method according to Claim 1, 2 or 3, **characterized in that** the transmitted and received ultrasound waves are electronically registered and evaluated, a position determination of the material defect in the shaped polysilicon body being carried out using the respective time of flight of the ultrasound waves.

5. Method according to Claim 3, **characterized in that** the ultrasound test head is moved up to the shaped polysilicon body and coupled to the shaped polysilicon body by means of ultrasound coupling, before exposure to the ultrasound waves takes place.

6. Method according to one of Claims 3 or 5, **characterized in that** the signal evaluation of the reflected ultrasound waves is carried out in a computation instrument, the time differences and/or the signal strength between the reflected ultrasound waves being compared with predetermined parameters in the computation instrument.

7. Method according to one of Claims 3, 5 or 6, **characterized in that** the ultrasound test head is moved up to a test head distance of from 5 to 200 mm from the shaped polysilicon body, particularly preferably from 5 to 80 mm.

8. Method according to one of Claims 1 to 7, **characterized in that** the surface of the shaped polysilicon body remains highly pure, highly pure being understood to mean the following surface metal values in pptw: Fe ≤ 15; Cr ≤ 1; Ni ≤ 0.5; Na ≤ 25; Zn ≤ 10; Cl ≤ 30; Cu ≤ 1; Mo ≤ 1; Tri ≤ 25; We ≤ 1; K ≤ 5; Co ≤ 0.5; Mn ≤ 0.5; Ca ≤ 45; Mg ≤ 11; V ≤ 0.5.

9. Method according to one of Claims 1 to 8, **characterized in that** the shaped polysilicon body contains no defects which are larger than 0.03 mm² in projection surface.

## Revendications

1. Procédé pour la vérification sans contamination et non-destructive d'un corps moulé en polysilicium ayant un diamètre compris entre 3 mm et 300 mm, la longueur à mesurer étant comprise entre 10 mm et 4500 mm, et ayant été réalisé par décomposition et dépôt chimique en phase vapeur d'un gaz contenant du silicium ou d'un mélange de gaz contenant du silicium dans un réacteur Siemens, ladite vérification portant sur des défauts de matière et étant réalisée en faisant passer des ondes d'ultrasons à travers le corps moulé en polysilicium, le couplage ultrasonore étant réalisé selon la technique du jet d'eau au moyen d'une eau exempte de bulles, l'eau étant complètement déminéralisée, les ondes d'ultrasons étant, après avoir traversé le corps moulé en polysilicium, enregistrées par un récepteur d'ultrasons, pour ainsi détecter des défauts de matière au sein du polysilicium.

2. Procédé selon la revendication 1, **caractérisé en ce que** les ondes d'ultrasons passant à travers le corps moulé en polysilicium sont envoyées depuis un émetteur d'ultrasons et que les ondes d'ultrasons ayant traversé le polysilicium sont retransformées en oscillations électriques et affichées par un récepteur d'ultrasons.

3. Procédé selon les revendications 1 ou 2, **caractérisé en ce que** les ondes d'ultrasons traversant le corps moulé en polysilicium sont envoyées depuis une tête de vérification aux ultrasons puis, suite à une réflexion totale ou partielle, enregistrées par la même tête de vérification aux ultrasons puis retransformées en impulsion de récepteur.

4. Procédé selon les revendications 1, 2 ou 3, **caractérisé en ce que** les ondes d'ultrasons émises et reçues sont enregistrées et évaluées de façon électronique, la localisation d'un défaut de matière au sein du corps moulé en polysilicium étant réalisée à travers la durée de parcours de chacune des ondes d'ultrasons.

5. Procédé selon la revendication 3, **caractérisé en ce que** la tête de vérification aux ultrasons est approchée du corps moulé en polysilicium et couplée au corps moulé en polysilicium à travers un couplage ultrasonore avant de démarrer la traversée par les ondes d'ultrasons.

6. Procédé selon l'une des revendications 3 ou 5, **caractérisé en ce que** l'évaluation du signal produit par les ondes d'ultrasons refléchies est réalisée par un dispositif de calcul, en comparant les différences de durée et/ou l'intensité du signal entre les ondes d'ultrasons-refléchies dans ledit dispositif de calcul, par rapport à des paramètres prédéfinis.

7. Procédé selon l'une des revendications 3, 5 ou 6, **caractérisé en ce que** la tête de vérification aux ultrasons est approchée du corps moulé en polysilicium de façon à ce que la distance de la tête de vérification soit comprise entre 5 et 200 mm, avec une préférence particulière entre 5 et 80 mm.

8. Procédé selon l'une des revendications 1 à 7, **caractérisé en ce que** la surface du corps moulé en polysilicium conserve une pureté élevée, ladite pureté élevée étant définie par les valeurs suivantes en pptw pour les métaux en surface : Fe ≤ 15 ; Cr ≤ 1 ; Ni ≤ 0,5 ; Na ≤ 25 ; Zn ≤ 10 ; Cl ≤ 30 ; Cu ≤ 1 ; Mo ≤ 1 ; Ti ≤ 25 ; W ≤ 1 ; K ≤ 5 ; Co ≤ 0,5 ; MH ≤ 0,5 ; Ca ≤ 45 ; Mg ≤ 11 ; V ≤ 0,5.

9. Procédé selon l'une des revendications 1 à 8, **caractérisé en ce que** le corps moulé en polysilicium ne présente pas de défauts correspondant à une surface de projection supérieure à 0,03 mm².
